Europäisches Patentamt

European Patent Office

Office européen des brevets

(19)

(11) EP 0 816 872 A1

(12) EUROPEAN PATENT APPLICATION

(43) Date of publication:
07.01.1998 Bulletin 1998/02

(51) Int. Cl.⁶: $G01V\ 3/30$

(21) Application number: 97304209.6

(22) Date of filing: 16.06.1997

(84) Designated Contracting States:
AT BE CH DE DK ES FI FR GB GR IE IT LI LU MC
NL PT SE

(30) Priority: 28.06.1996 GB 9613592

(71) Applicant: ERA PATENTS LIMITED
Leatherhead Surrey KT22 7SA (GB)

(72) Inventor: Daniels, David John
Shipley, Horsham, West Sussex RH13 8AX (GB)

(74) Representative:
Rackham, Stephen Neil
GILL JENNINGS & EVERY,
Broadgate House,
7 Eldon Street
London EC2M 7LH (GB)

(54) Borehole probe with one or more radar antennae

(57) Bore probe having a plurality of antennas around the periphery of the probe. A signal processor responsive to the return of the radar antennas derives three dimensional image data for a volume of the dielectric material surrounding the bore.

Fig 3. Generic antenna arrangement

**Description**

The present invention relates to a probe for use in a bore such as a generally vertical bore of the type drilled for geological surveying or a sewer pipe or other buried conduit. The invention is particularly, although not exclusively, concerned with the detection of voids in the vicinity of a sewer.

As described in British patent application GB-A-2,042,301 relating to the present inventor's earlier work in this field, voids near sewer pipes may be caused by leaks from the pipes and if not detected and remedied may propagate to the surface causing subsidence. That earlier patent proposes the use of a probe based on a pair of spaced apart co-linear antennas. With appropriate processing the return from the antennas provides in effect a sample of the properties of the medium surrounding the sewer along the path of propagation of the signal. With appropriate time-domain processing, this can yield some limited positional information on the characteristics of the medium at different depths.

According to a first aspect of the present invention, there is provided a bore probe including one or more radar antennas and a signal processor responsive to the return from the radar antennas for deriving data characteristic of a dielectric medium surrounding the bore, characterised by a plurality of antennas located with their radiating faces or apertures distributed around the periphery of the probe and in that the signal processor is arranged to derive 3-dimensional image data for a volume of the dielectric medium.

By contrast with the prior art system which was able only to provide limited and ambiguous positional information, the present invention provides a probe system capable of 3-dimensional imaging of the dielectric medium (e.g. earth or rock) surrounding the bore. This allows the position of voids or other features such as buried pipes to be determined unambiguously. These advantages are realised through the use of antennas arranged around the periphery of the probe. The return from these antennas is then processed to yield 3-dimensional image data for the dielectric medium. This represents a significant departure from the approach adopted in prior art systems which have not been able to provide 3-dimensional imaging. The or each antenna may comprise a pair of antenna elements mounted on a planar substrate. For most efficient use of the limited volume of the probe it is found to be advantageous to locate the antenna at the periphery, leaving the internal volume of the probe free. However, other arrangements may be used. For example, the antennas may comprise a number of TEM horns arranged radially around the core of the probe at different angles. In either case, the radiating aperture or face is at the periphery.

The elements may be spaced apart in the longitudinal direction of the probe and the substrate may lie in the plane generally normal to the radial direction.

Preferably the plurality of antennas arranged around the periphery of the probe are connected to different channels of the radar system. Preferably there are from 4 to 16 channels and a corresponding number of antennas. Each of the plurality of antennas may be a combined transmit-receive antenna connected to a transmit-receive switch. Alternatively, the probe may include separate transmit and receive antennas spaced apart along the probe.

Preferably the radar is a time-domain ultra-wideband impulse radar system transmitting a monocycle impulse of between 0.5ns and 5ns, and more preferably in the region of 1ns. Alternatively other wideband systems, such as FMCW radar, might be used.

Preferably each of the antennas is discretely resistively loaded. Preferably the resistive profile of the antenna element increases as a function of the distance from the antenna feed point.

Preferably the signal processor further comprises a pattern recognition stage arranged to process the image data in dependence upon a target image. Preferably the pattern recognition stage includes a mask filter having coefficients set in dependence upon the target image and arranged to be convolved with the image data.

Alternatively or in addition, the pattern recognition stage may include a neural network trained on the target image to be recognised.

According to a second aspect of the present invention, there is provided a method of inspecting a dielectric medium around a bore including moving a probe including one or more radar antennas along the bore, and processing the signal returned from the radar antennas to derive data characteristic of the dielectric medium, characterised in that the radar return is obtained from a plurality of antennas disposed with their radiating apertures or faces at the periphery of the probe, and in that the step of processing the return from the radar antennas includes deriving 3-dimensional image data for a volume of the dielectric medium.

Systems embodying the present invention will now be described in further detail, by way of example only, with reference to the accompanying drawings in which:

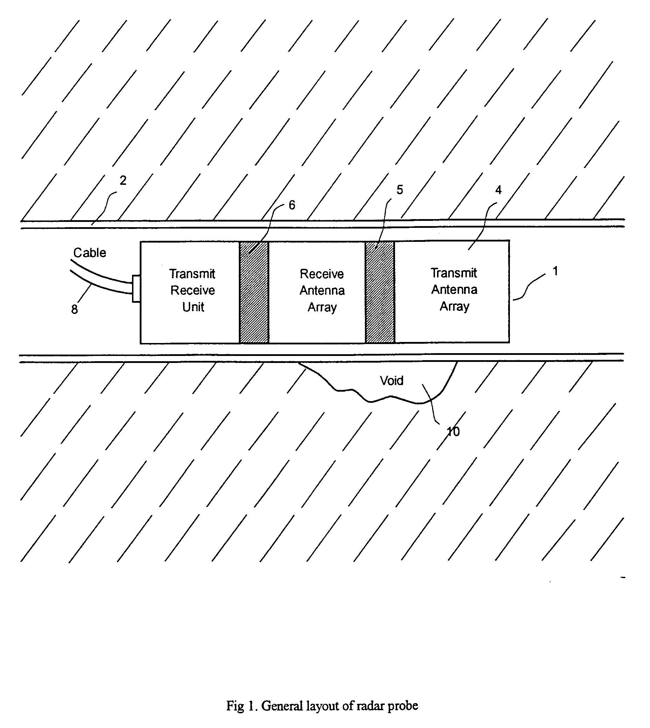

Figure 1 is a diagram showing the general layout of a bore probe system;
Figure 2 shows a motor unit for use with the probe of Figure 1;
Figure 3 is a partially cut away perspective view of the probe;
Figure 4 shows possible radar antenna configurations for use with the probe;
Figure 5 shows a sectional view of an antenna array;
Figure 6 shows a loaded dipole antenna element layout;
Figure 7 shows PCB layouts for alternative discrete antenna elements;
Figure 8 is a diagram showing the transmitter/receiver system architecture;

Figure 9 shows a radar image obtained from the top quadrant of a quarter-circle discrete element antenna array;

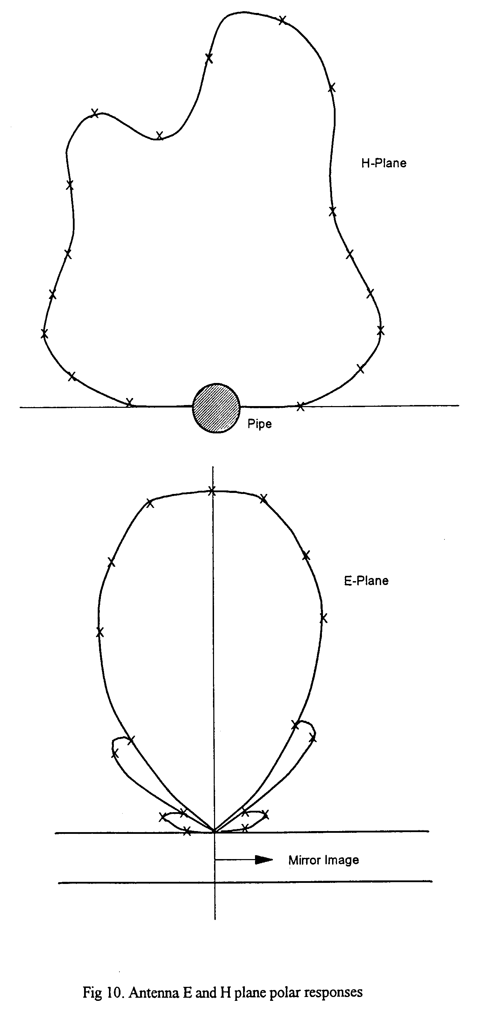

Figures 10a and 10b show antenna beam shapes in the H-plane and E-plane respectively for the discrete antenna of Figure 6;

Figure 11 is a diagram illustrating the output from the four quadrants of the antenna array; and,

Figure 12 shows the resistive profile for the alternative discrete antenna elements of Figure 7.

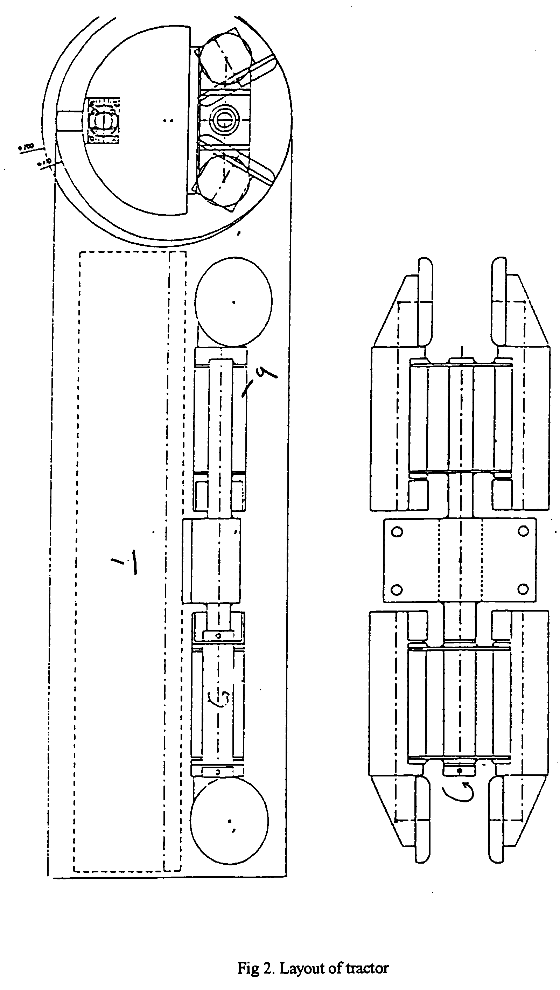

A bore probe 1, used in the present example for surveying a sewer pipe 2, comprises receive and transmit radar antenna arrays 3,4 which are spaced apart along the probe and separated by regions of radar absorbing material 5,6. The antenna arrays are connected to a transmit/receive unit 7 which is connected via a cable 8 to signal processing circuitry which in this example is located remotely from the probe. The probe may be mounted on a motor unit 9 such as that shown in Figure 2. This unit 9 carries the probe along the sewer pipe.

As it goes along the pipe the probe 1 transmits radar signals into the surrounding earth and detects the returned radar signal. After initial sampling and processing in the transmit/receive unit, a resulting datastream is passed via the cable to a signal processing unit which, in the manner described in further detail below, derives from the data a 3-dimensional image of the earth around the pipe. In particular the image data allows the detection of any void 10 in the vicinity of the pipe.

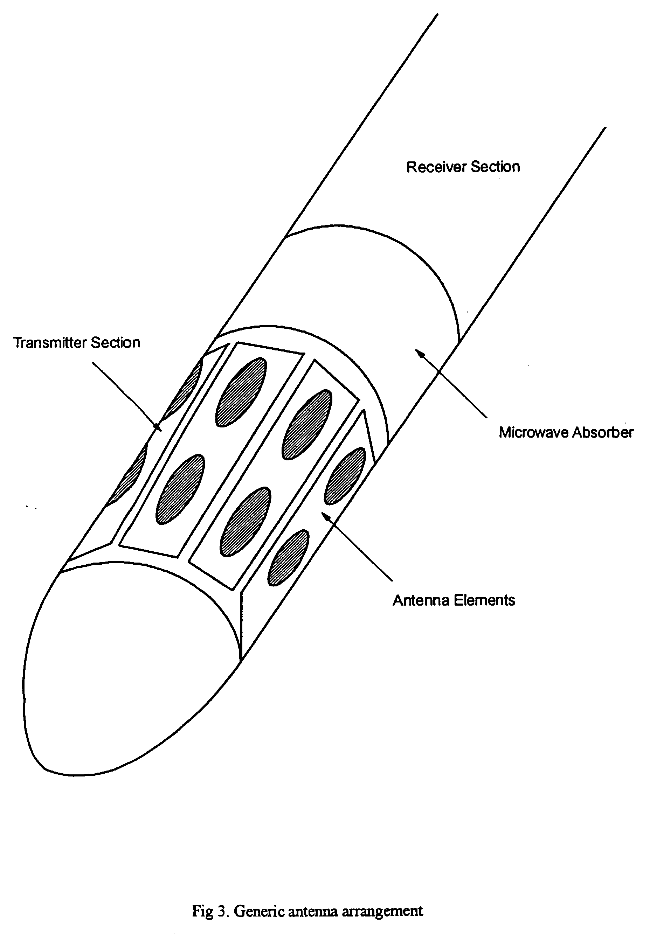

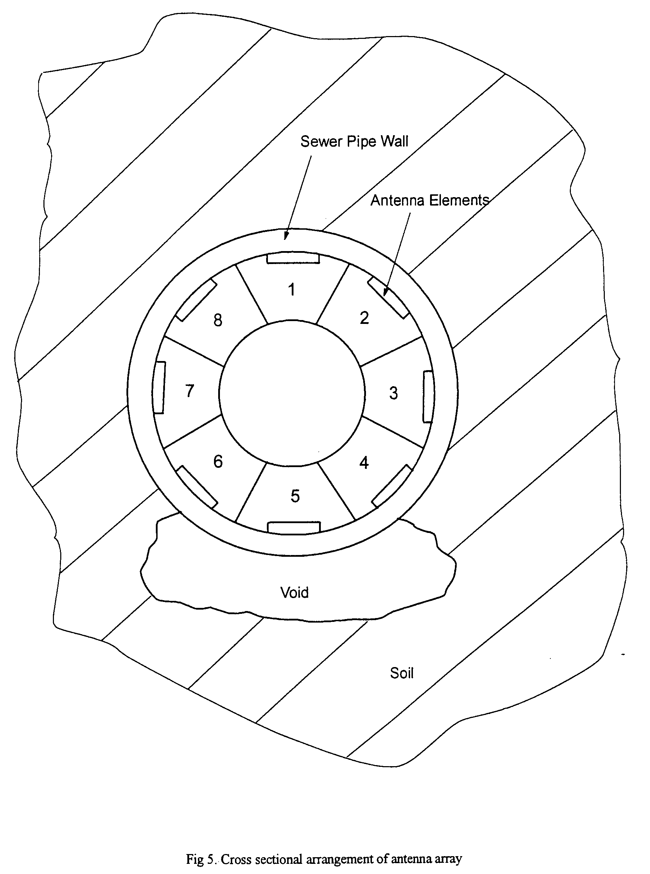

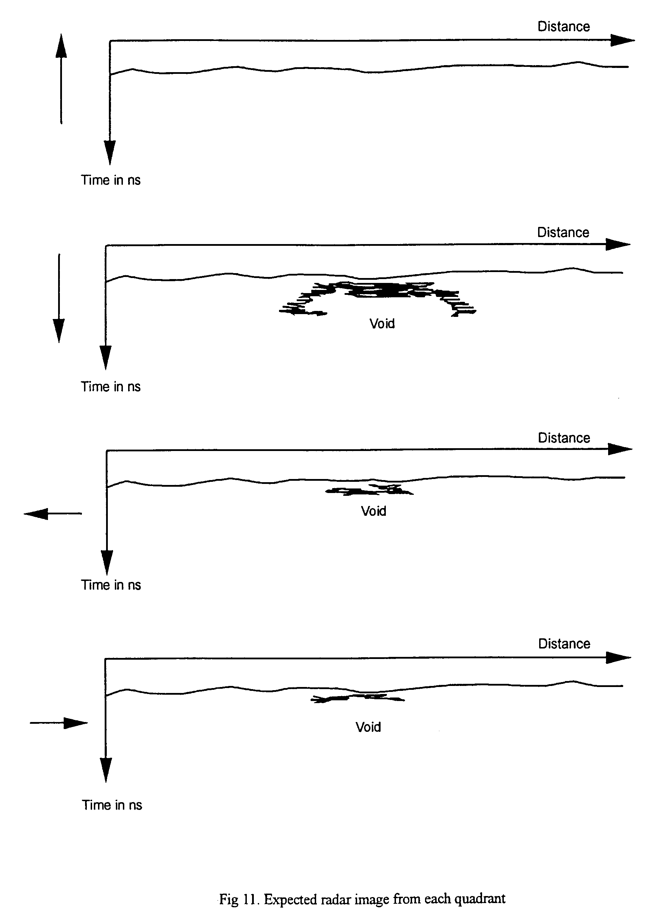

As shown in Figure 3, the antennas are in this example arranged in an array arranged around the periphery of the probe. Each antenna fires or receives primarily in the radial direction. The overall system is able to interrogate a zone of 360° in azimuth and typically 35° in elevation with respect to the axis of the cylinder. Within this zone, a 3-dimensional image of the dielectric material, i.e. the earth, is derived by appropriate processing of the data from the probe. Figure 5 shows an end view of the array and Figure 11 shows the outputs from four of the antennas.

Preferred implementations of the different components of the system will now be discussed in further detail.

Antenna Systems

The antenna arrays are chosen to provide at least octave and ideally decade bandwidth transmission characteristics, together with a linear phase response. Appropriate classes of antennas are TEM horns, resistively loaded antennas, biconical antennas, loaded dipoles and bow-tie antennas.

In use, the impulse driving the antenna is differentiated by the antenna to form a monocycle. The duration of the monocycle is related to the physical dimensions of the antenna. In the presently described systems, separate antennas are used for transmission and detection of the radar signal. This avoids the difficulty of providing a fast transmit/receive switch. Another important design criterion is the minimising of cross coupling levels between the transmit and receive antennas. Typically the kind of arrangement being considered will provide a mean isolation in the region of 40-50dB. The achievement of this type of performance is highly dependent upon the standard of mechanical construction and the materials used to absorb energy between the transmitting and receiving antenna elements.

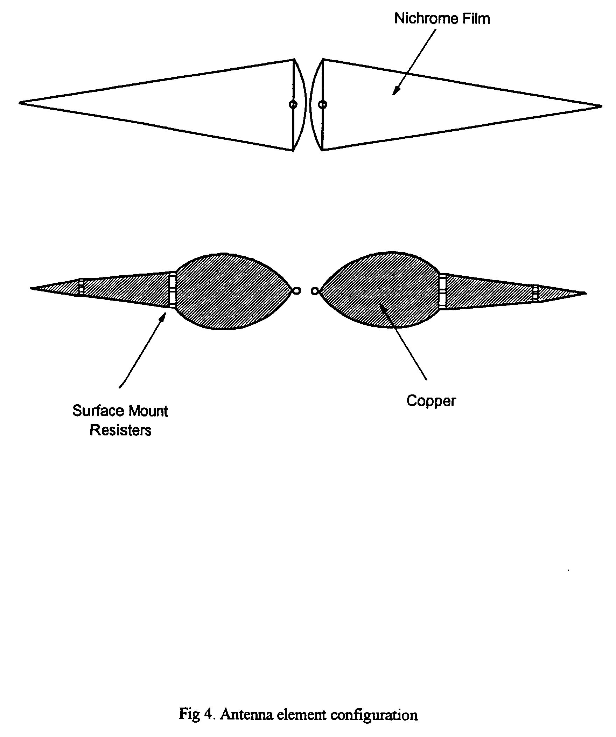

The preferred implementations of the present invention use either continuously resistively loaded antenna elements, or lumped element resistively loaded antennas. General layouts of this type are shown in Figure 4. The continuously loaded resistive antenna (Figure 4a) may be manufactured from a thin nichrome film. It offers ultra wideband performance but at the expense of efficiency. Typical efficiencies may in the order of 10-20% of the low end of the frequency range. An alternative design (Figure 4b) providing improved efficiency over the continuously loaded resistive antenna uses a pair of segmented and tapered sections with resistive loading achieved by means of connection together by surface-mounted resistors. Radial cuts may be used to reduce transfer currents. This provides higher efficiency without serious degradation of the time domain response.

In the embodiments of the present invention, each channel has a pair of antennas, one for transmit and one for receive. These antennas may be either vertically polarised or horizontally polarised. The use of horizontally polarised antennas may provide better isolation between transmit and receive elements by comparison with vertically polarised antennas. However, the horizontally polarised arrangement may result in lower levels of reflective signal. Artificial dielectric loading of the antennas may be used to provide improved low frequency performance. However the discrete elements of artificial dielectric loading have to be configured to avoid giving rise to trapped resonant waves.

A small balun may be used to feed the antenna, positioned to avoid disturbance of the mere field position.

The use of the four-quadrant array system enables the radar to identify the radial position of, e.g., a void, thus helping in subsequent remedial work. A single antenna cannot provide this capability. However it is necessary to avoid leakage of energy from one quadrant to another. Because the array antenna is switched, the problem of leakage is likely to arise from the exciting of resonances within the other quadrants which in turn may degrade the performance of an individual quadrant element. The radiation pattern from each antenna is such as to provide quadrant coverage with relatively low back lobes. However, each antenna in practice is likely to exhibit a radiation pattern which results in a wider coverage.

The physical construction of the antenna is particularly important in achieving a good time domain response. Not only is each quadrant isolated from other quadrants, but the feed cables are also isolated from each antenna. Unless this is done, the feed cables would effect the other radiating elements. As shown in Figure 3, a central small diameter cylinder is used to house the cables and the quadrant elements are spaced around this cylinder. Shielding between each quadrant is achieved by means of microwave absorber material. Optionally, artificial dielectric material may be placed in each quadrant to improve the low frequency response. It is important to reduce the effect of air gaps between the antennas and the wall of the pipe, as these air gaps can cause additional multiple reflections. The effects of water in proximity to the antenna elements also need to be taken into consideration.

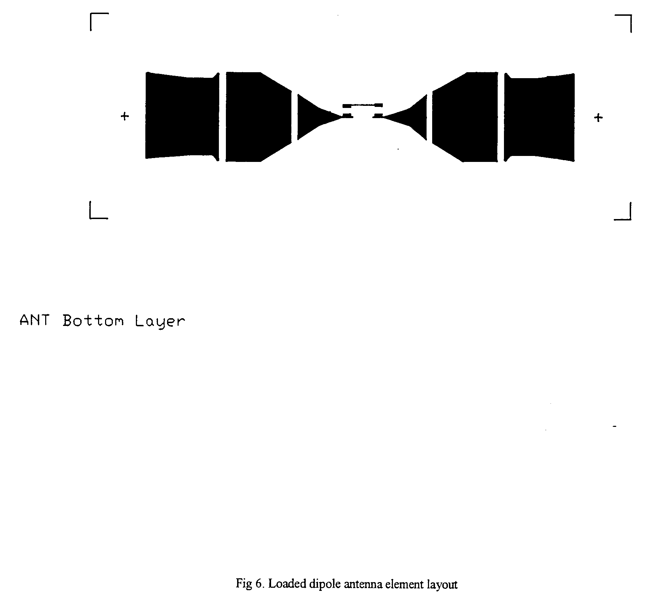

The preferred implementation of the present invention uses discrete antennas that is antennas consisting of copper patches etched on a printed circuit board and then linked together with surface-mount resistors to produce a resistive profile which increases as a function of the distance from the feed point. The resistor layout is shown in Figure 6. The overall antenna dimensions are chosen to be as large as possible, within the constraints imposed by the probe dimensions, since the low frequency response of the antenna is primarily limited by its largest dimension. Each dipole antenna is fed by a balun manufactured by Anzac, model TP103. The purpose of the balun is to transform from an unbalanced co-axial transmission line to a balanced line (the dipole) without disturbing the antenna radiation pattern. This particular model transforms from a $50\Omega$ unbalanced line to $200\Omega$ balanced line with a VSWR of less than 1.3 from 500KHz to 1.5GHz. The position of the balun and the size of any ground plane on which it is mounted can have a considerable effect on the antennas performance. In the present embodiment, the balun was mounted on a small ground plane directly below the antenna.

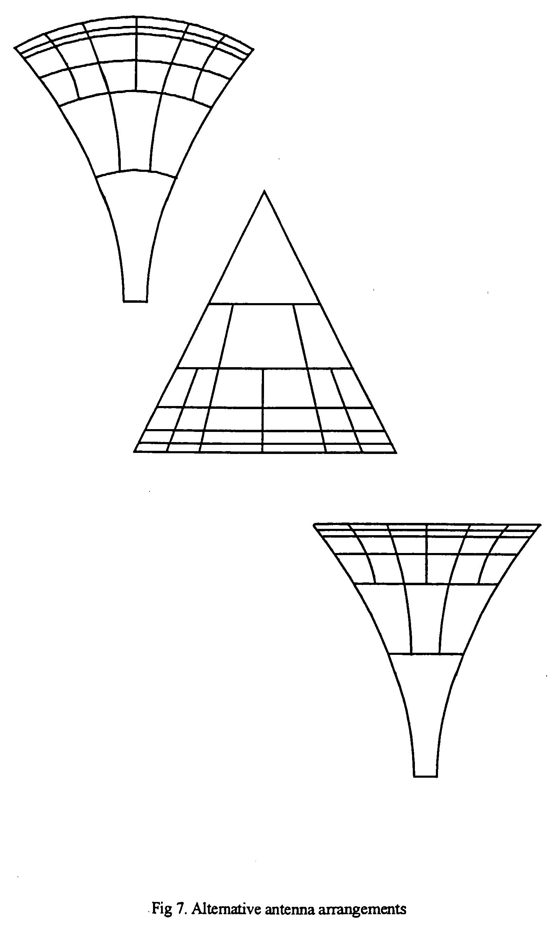

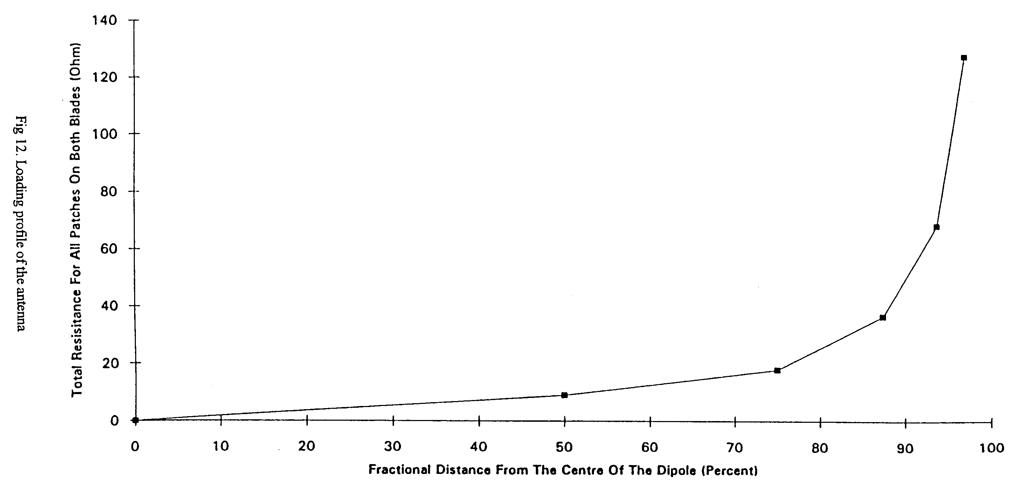

Figure 7 shows PCB layouts for alternative discrete antenna elements, and Figure 12 an appropriate resistive profile for these alternative layouts.

### Transmitter/Receive Unit

A block diagram of the proposed transmitter/receive unit is shown in Figure 7.

### Transmitter

Impulse or monocycle waveform radar signals are suitable for penetrating soils, man-made materials, foliage etc. Such waveforms can be generated by a variety of techniques, but all fundamentally rely upon the discharge of stored energy in short transmission lines.

Using the avalanche breakdown mode in transistors, output pulses of several hundred volts amplitude and as short a duration as 1ns can be generated at repetition intervals as short as 0.25µs. The present system uses a repetition timing of 1µs. The use of a high repetition rate is the most cost effective means of improving the dynamic range of an impulse system. The use of a pulse repetition rate which is high by comparison with the prior art is an attractive means of increasing the mean power and hence the system performance. With such higher pulse repetition rates it becomes feasible to average the received signal to a much greater extent than has been possible hitherto, and signal improvements of 10dB to 20dB become possible hence improving effective receiver sensitivity.

### Receiver

The receiver is based on high speed sampling circuits which transform the real time window from the nanosecond region to the millisecond range with adequately low levels of sampling jitter (around 10-50ps). These circuits inherently exhibit a low S/N ration because the spectrum of the sampling pulse is not well matched to the receive pulse. In addition, the dynamic range of most high speed sampling circuits rarely exceeds 70dB, whereas the signal dynamic range can be much larger due to the high levels of propagation path attenuation. Consequently, impulse radar systems use time varying gain to compress the higher level return signals and averaging to recover the low level signals for distant reflections. Difficulties are generally encountered in implementing time varying gain due to the short ranges of the order of 20ns - 100ns. In systems embodying the present invention, the time varying gain element is placed before the sampling diode network. The received signal dynamic range is effectively compressed, thereby overcoming the problems of saturation on high level near-time signals. The receiver can provide up to 40dB time varying gain. The gain is varied in a known manner to avoid the loss of absolute amplitude information.

### Signal Processing

In general, signal processing is performed on:

(1) Individual amplitude - time waveforms

(2) Collections of amplitude - time waveforms either along a line or over an area.

(3) Collections of data over a volume (3-D).

(4) Identification of known spatial target characteristics using 3-D data sets via image reconstruction.

(5) Identification of known target characteristics using unique spectral characteristics.

The received time waveform may be described as the convolution of several time functions, each of which is the impulse response of part of the system. In addition, there is noise n. Thus:

$$f_r(t) = f_t * f_r * f_b * f_g * f_u * f_g * f_r + n$$

where $f_t$ is the signal applied to the transmitting transducer, $f_r$ is the receiving transducer the time response, $f_b$ is a breakthrough function, $f_g$ is the response of the ground, and $f_u$ is the response of the set of underground targets.

The function $f_u(t)$ is itself made up of the convolution of a delta-function sequence $f_d$, representing the distribution of targets, together with the response of an individual target, $f_x$. (When more than one target type is involved, each has its own $f_x(t)$ and distribution $f_d$). The time parameter in $f_d(t)$ is related, through the wave velocity in the medium, to the distance from transmitting transducer to the target and back to the receiving transducer.

The breakthrough function, $f_b$, is made up of the convolution of a breakthrough inherent to the transmit and receive transducer design and geometry, $f_{bo}$, with a modifying function, $f_{bg}$, which arises due to the presence of the ground and its associated inhomogeneity in the vicinity of the transducer. Similarly, the presence of the ground, even if uniform, modifies the transducer response from its free space form $f_{oo}$ to $f_r = f_{oo} * f_{og}$.

Identical transducers are assumed in electromagnetic systems. When they are not identical then $f_r$ and $f_b$ are both affected. The only term known with certainty in all systems is $f_s$. The ground properties, $f_g$, in terms of the frequency variation of its attenuation and dispersion can be measured on a statistical basis.

The basic techniques for the processing of individual time waveforms are as follows:

Noise reduction by averaging: Whatever the transmitted waveform, unless it is random noise, its repetition allows a series of nominally identical measurements to be averaged. The noise bandwidth is reduced to $I/N_t$ when the unweighted mean is taken of N measurements spaced in time by t. This can be reduced to any desired level by spending long enough over the sequence of measurements. The procedure is sometimes referred to as stacking. If each record is stored, or if a sufficient number are stored in a buffer, then weighted averaging can be performed. The average of this is only marginal, however, but it makes possible the equality of noise bandwidth and signal bandwidth under circumstances when the latter is known to be less than the systems bandwidth (because of oversampling, for example). This technique reduces random noise but has no effect on clutter.

Clutter reduction by subtracting the mean: This involves the use of a number of measurements made at a set of locations over the same material type. If it is assumed that the material properties vary randomly about a location-independent mean, and that the target indications are present in only a small number of measurements, then the mean of a large number of results can be considered to be a measure of the system clutter. Subtraction of the mean waveform from each individual measurement then gives a set of waveforms in which a target reflection is more visible. Within the limitations described above it is a useful technique. What cannot be known in any practical situation is the variation of the ground properties. Some statistical estimates may be made of the properties of the ground, but the method is only applicable when the statistics of the ground are position independent.

Time-varying gain: To compare for the attenuation of the earth material, an exponential weighting may be applied to the time trace. When the trace is stored in digital form this a trivial exercise once the material attenuation is known. In real-time recording systems this is done with a specially designed amplifier. The disadvantage of the technique, if not used intelligently, is that system noise can be exaggerated at large time values, increasing the difficulty of the interpretation of the results. A more realistic approach is to apply a gain reduction at short times so as to suppress antenna breakthrough and ground reflection signals, followed by a gain increase of up to a maximum value, after which the response is flat. This makes most effective use of dynamic range of the data presentation medium. In digital systems the breakthrough and ground surface signals can be set to zero.

Frequency filtering: Lowpass, highpass and bandpass filters are provided in some commercially available equipment. Their settings can be adjusted to remove any signals not in the desired information bandwidth, and their setting is largely governed by the experience of the operator.

Essentially the signal recovery is achieved by a filter which responds to desired waveform in the data. Usually this is in the form of a wavelet. The filter is then designed to pick out that signal in the received waveform and to modify its shape, usually into a single peak, to increase the detection probability. The desired output shape is used as an input to the filter design process.

Wiener filtering is one such method and it is assumed that there is available, through a calibration experiment or modelling, an estimate of the signal.

An important special case of the Wiener filter is the matched filter, well known in radar detection theory. Another special case is the inverse filter, in which the spectrum of the filter is the reciprocal of the signal spectrum. In practice, there must be some band limiting applied or any noise or clutter energy will dominate the result. When noise and clutter is present the optimum filter has been defined and its frequency response H(f) is given by:

$$H(f) = \frac{S^*(f)}{\dfrac{N_o}{2} + K_c|S(f)|^2}$$

where $N_o$ is the noise power, $S(f)$ is the signal spectrum and $K_c|S(f)|^2$ is the clutter power.

In the case where clutter dominates it becomes the inverse filter and where noise dominates it becomes the matched filter.

The problem with implementing such filters for detection of anomalies directly is that it cannot be assumed that the clutter spectrum is necessarily identical with that of signal received from a target, on account of the lowpass filtering effect of the ground. Thus, the antenna breakthrough signal has the widest spectrum, the ground reflection signal has some spectral reduction and backscatter from random variations in the ground has a reducing spectral width as the scatterer lie deeper. Not only is the amplitude of the spectrum altered, but so also, in principle, is the phase response.

The above equation is optimum in the sense that it takes account of known noise and clutter properties to obtain maximum information extraction. To take account of the uncertainties in both of these quantities, it is preferable to design the Wiener filter in terms of a parameter (time resolution, for example) which can be adjusted so as to match best the characteristics of the data encountered in practice. This means that the problem of "over-design" may be avoided; that is, requiring as output a pulse shape whose width and sidelobe levels are such that the filter performance becomes very sensitive to small errors in the data.

More general modelling methods for time series analysis have been under development and extension for a number of years and are well known in a number of areas. They have been applied to seismic data with some success.

Methods such as spectral estimation using Fourier techniques maximum entropy, and maximum likelihood are well established and deconvolution using Wiener-Hopf or Rice filtering are also used. Velocity, polarisation and homomorphic filtering are also useful in particular situations.

Target-dependent methods: If the target has sufficiently distinctive scattering properties then its peculiarities can be used as a detection aid. There are two commonly encountered types of target which have such easily identifiable properties, namely small, localised regularly shaped objects and linear features. The former have a set or resonances which can be calculated and which impose a characteristic spectral signature on the backscattered signal when illuminated with broadband radiation. The latter has a characteristic polarisation signature: when illuminated with unpolarised or circularly polarised radiation the scattered signal has approximately linear polarisation, with polarisation angle dependent on the direction of the long axis of the target. This effect is in addition to any resonances but these are usually weak when the width of the long target is small compared with the radiating wavelength, or range of wavelengths.

Target resonance methods are less useful for targets which are deeply buried because of the reduced information bandwidth in the received signal.

In view of the nature of the application it is likely that much of the signal processing will have to be carried out on a limited (in a spatial sense) data set and this aspect would need close attention.

Where a more extensive data set is available multiwaveform processing is feasible and, for example, synthetic aperture, and diffraction stack migration Kirchoff methods can be employed.

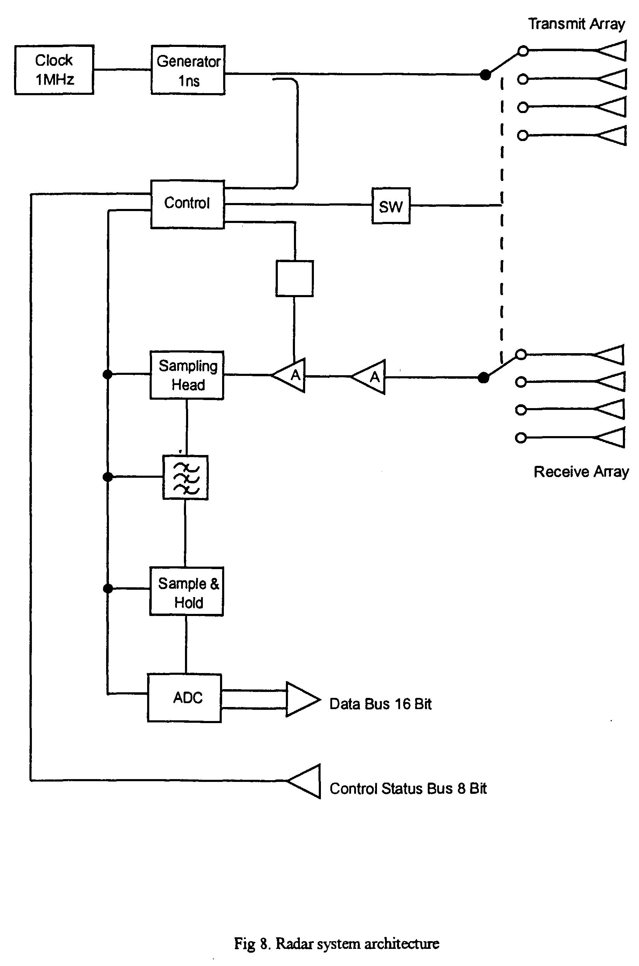

The radar may be used in such a way as to generate a sequence of A-scans related to the survey position. This sequence can be termed a B-scan and effectively represents on one axis (y) depth and the orthogonal axis (x), linear position. The amplitude of the signal may be shown as a series of overlapping signals or alternatively a "wiggle plot" (borrowed from the seismic terminology) or a grey scale coded intensity plot or a pseudo-colour image. The anticipated form of display of the outputs from the four quadrants is shown in Fig.7 although a more typical display would be as shown in Fig. 8.

As the antennas generally used have a poor directivity, the pattern of the reflected waveform in the B-scan represented the spatial convolution of the antenna pattern with the point source of the target. This pattern may be deconvolved using any of the following processes: synthetic aperture processing, conjugate gradient methods, diffraction stack migration, Hough transformer and reverse migration. Many of these techniques work well on isolated targets such as pipes which have well defined geometrical boundaries. The situation is more difficult with stratified layers and of course anisotropic materials.

When a focused image of the buried object is created whether as a B-scan or C-scan (are at a particular range of depths), it is necessary to interpret the radar image as being generated by a physical structure. This is not always easy in the case of a cluttered image, and a great deal still depends on the field experience of the operator. Automated methods based on standard image processing methods (mask filtering) image matching etc as well as methods based on neural networks have been investigated. The variability of ground conditions as well as the physics of electromagnetic wave propagation and reflection must be carefully taken into account in generating pattern libraries. For example; the depth image of a void is always apparently smaller in the z axis than its physical size, where comer reflectors of any reasonable size generate large, apparently discontinuous reflection images and conductive targets which reverberate by means of stored energy create extended depth images.

One of the most cost effective methods that we have identified is based on image processing techniques. In this process a two dimensional mask filter, whose coefficients are set to those of the image of the target (for which analysis is required) is convolved with the data. Alternatively, a three dimensional data set is generated and two dimensional reduced data images in any orthogonal plane produced.

Template matching, or matched filtering, convolves the image with a kernel that contains a pattern recognition to determine which parts of an image are most likely to contain targets. In processing radar data, several important factors must be considered. Firstly, unlike image data, radar data is dipolar hence an initial operation to convert radar data to absolute data or thresholding at zero to give positive going or negative going data only. Second, the radar image does not correspond to geometric patterns and it will be necessary to identify suitable kernel coefficients which are appropriate to the radar image pattern rather than a geometrical model.

The signal processor used in the present example is based on a 486 SX microcomputer enhanced by the incorporation of a TMS 320C31 DSP to carry out real-time processing of the data. Inbuilt data storage can record up to 500 MBytes of data on a conventional hard disc. The transmitter/receive unit contains all the modules required to drive the antennas and to interface with the signal processing microprocessor. An impulse generator module connected to the antennas provides a 1ns 30V unipolar impulse repeated every 1μs. The transmitter/receive unit is controlled internally by a control and timing logic circuit which enables high speed data acquisition and control. The received waveform is sampled at defined intervals of 25ps, 50ps or 100ps which results in a wideband high resolution system. A 16-bit A/D converter is used to sample each downconverted received waveform at 256 or 512 discrete points providing a time range of 0-25ns, equivalent to 1.8m in a material with a relative dielectric constant of 4. The number of sampling points and the sampling interval can be set externally, as can the number of averages of each waveform. Typically 10 averages of each received waveform can be gathered in 2.56ms and fed via a dual FIFO buffer to the processor.

A key feature of the receiver is the use of time-dependent gain before the high-speed sampling. The dynamic range of most sampling heads is used in standard commercial radar systems rarely exceeds 60dB, while the dynamic range of the reflected signals can easily cover 100-120dB. The radar system used in the present invention through the use of time going gain overcomes the limited dynamic range of the sampling head to provide an overall dynamic range for the system of around 130dB.

The signal processing unit comprising the 486 microcomputer and DSP output an image on a VGA display and in addition or alternatively store on disc for future processing. A single screen of the rolling display corresponds to 600 waveforms each of 256 samples and can be viewed in grey scale or colour. The intensity of each waveform is coded black (most negative) to white (most positive) in grey scale or in shades of black, blue, green, yellow and red for most negative to most positive in the colour image.

A suite of standard processing algorithms is available to correct for the attenuation of the earth material and includes filtering and threshold levels. The display enables a real-time colour image of the energy density of surveyed areas to be continuously scrolled. Correct processing of data is critically important in generating useful images of the surveyed area. The images shown, for example, in Figures ? have typically had the running average subtracted to remove any constant background effects and high-pass filtering applied to enhance the short range detection.

In an experimental demonstration of the system, the probe was taken through a sewer pipe under test, and a 6m length of pipe was covered in approximately 15 seconds.

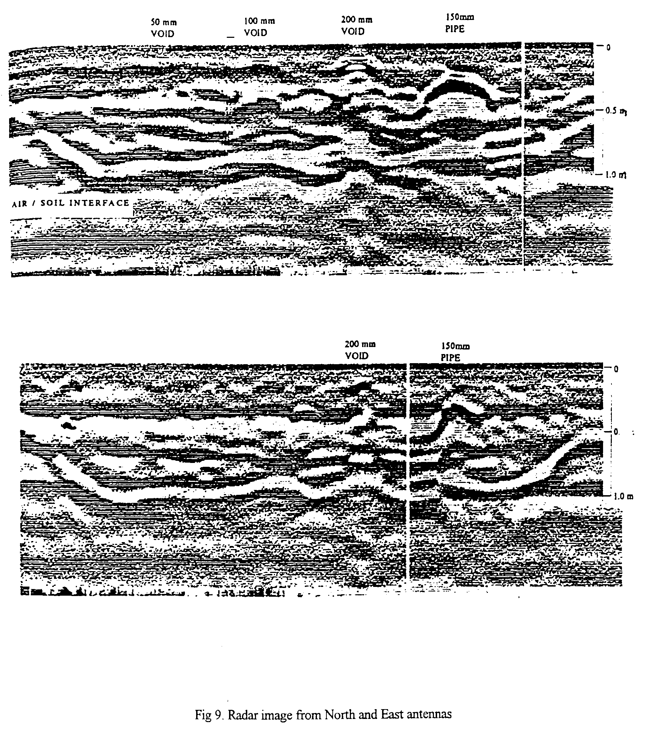

Figure 9 shows the image obtained using N and E facing antennas of the array. A buried pipe and voids of three different sides (50mm, 100mm and 200mm) are visible in the radar image. By correlating the images from all directions of the array the signal processor can locate in 3-dimensions the position of these features.

## Claims

1. A bore probe including one or more radar antennas and a signal processor responsive to the return from the radar antennas for deriving data characteristic of a dielectric medium surrounding the bore, characterised by a plurality of antennas located with their radiating faces or apertures distributed around the periphery of the probe and in that the signal processor is arranged to derive 3-dimensional image data for a volume of the dielectric medium.

2. A system according to claim 1, in which each of the plurality of antennas is connected to a different channel of the radar system.

3. A system according to claim 2, in which each of the plurality of antennas is a combined transmit-receive antenna connected to a transmit-receive switch.

4. A system according to claim 2, in which the probe includes separate transmit and receive antennas spaced apart along the probe.

5. A system according to any one of the preceding claims in which the or each antenna is mounted on a respective planar substrate located at the periphery of the probe and lying generally normal to the radial direction of the probe.

6. A system according to any one of the preceding claims, in which the radar is an ultra-wideband radar system.

7. A system according to claim 6, in which the radar system is a time-domain impulse system.

8. A system according to claim 7, in which the radar transmits a monocycle impulse of between 0.5ns and 5ns and preferably of substantially 1ns duration.

9. A system according to any one of claims 6 to 8, in which the radar pulses are repeated with a repetition interval of 10μs or less.

10. A system according to claim 9, in which the repetition interval is in the range from substantially 1μs to substantially 4μs.

11. A system according to any one of the preceding claims, in which each of the plurality of antennas is formed from discretely resistively loaded antenna elements.

12. A system according to any one of the preceding claims, in which the resistive profile of the antenna elements increases as a function of the distance from the antenna feed point.

13. A system according to any one of the preceding claims, in which the signal processor further comprises a pattern recognition stage arranged to process the image data in dependence upon a target image.

14. A system according to claim 13, in which the pattern recognition stage includes a mask filter having coefficients set in dependence upon the target image and arranged to be convolved with the image data.

15. A system according to claim 13 or 14, in which the pattern recognition stage includes a neural network trained on the target image to be recognised.

16. A system according to any one of the preceding claims in which the radar has 4 or more channels, and the probe has a corresponding number of antennas.

17. A method of inspecting a dielectric medium around a bore including moving a probe including one or more radar antennas along the bore, and processing the signal returned from the radar antennas to derive data characteristic of the dielectric medium, characterised in that the radar return is obtained from a plurality of antennas disposed with their radiating apertures or faces at the periphery of the probe, and in that the step of processing the return from the radar antennas includes deriving 3-dimensional image data for a volume of the dielectric medium.

18. A method according to claim 17, in which the plurality of antennas arranged around the periphery of the probe are connected to different channels of the radar system.

Fig 1. General layout of radar probe

Fig 2. Layout of tractor

Fig 3. Generic antenna arrangement

Nichrome Film

Surface Mount
Resisters

Copper

Fig 4. Antenna element configuration

Fig 5. Cross sectional arrangement of antenna array

ANT Bottom Layer

Fig 6. Loaded dipole antenna element layout

Fig 7. Alternative antenna arrangements

Fig 8. Radar system architecture

Fig 9. Radar image from North and East antennas

H-Plane

Pipe

E-Plane

Mirror Image

Fig 10. Antenna E and H plane polar responses

Distance

Time in ns

Distance

Void

Time in ns

Distance

Void

Time in ns

Distance

Void

Time in ns

Fig 11. Expected radar image from each quadrant

Fig 12. Loading profile of the antenna

# EP 0 816 872 A1

European Patent Office

**EUROPEAN SEARCH REPORT**

Application Number

EP 97 30 4209

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 530 359 A (HABASHY TAREK M ET AL) 25 June 1996 <br> * column 2, line 54 - line 67; claims 1-6; figures 2-4 * <br> --- | 1 | G01V3/30 |
| A | GB 2 156 527 A (NL INDUSTRIES INC) 9 October 1985 <br> * abstract; figure 5 * <br> --- | 1 | |
| A | US 4 422 043 A (MEADOR RICHARD A) 20 December 1983 <br> * abstract; figures 3,4 * <br> --- | 1,2,4, 16-18 | |
| A,D | GB 2 042 301 A (PLESSEY CO LTD) 17 September 1980 <br> * abstract * <br> * page 1, column 2, line 70 - line 74; figures 1,3 * <br> ----- | 1,7-10 | |
| | | | **TECHNICAL FIELDS SEARCHED (Int.Cl.6)** <br><br> G01V |

The present search report has been drawn up for all claims

| Place of search | Date of completion of the search | Examiner |
|---|---|---|
| THE HAGUE | 26 September 1997 | Anderson, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)